# EUROPEAN PATENT APPLICATION

(11) **EP 1 667 409 A1**
(43) Date of publication of application: **07.06.2006**
(21) Application number: 05026386.2
(22) Date of filing: 02.12.2005
(51) Int. Cl.: H04M 1/02

(54) **Foldable phone with slidable housing to protect display and camera**

(30) Priority: 03.12.2004 KR 2004101439
(71) Applicant: Samsung Electronics Co., Ltd., Suwon-si, Gyeonggi-Do (KR)
(72) Inventor: Cha, Seong-Won, Samsung Electronics Co.,Ltd, Suwon-si Gyeonggi-do (KR); Park, In-Gon, Samsung Electronics Co.,Ltd, Suwon-si Gyeonggi-do (KR); Lee, Chang-Soo, Samsung Electronics Co.,Ltd, Suwon-si Gyeonggi-do (KR)
(74) Representative: Grünecker, Kinkeldey, Stockmair & Schwanhäusser Anwaltssozietät

(57) **Abstract**

A folding-type portable apparatus having a display device and a camera lens, gradually and simultaneously exposed as the slider slides. The folding-type portable apparatus includes a body (100); a folder (200) having a first display device (210) positioned on the top surface thereof; and a slider (300) provided with a camera lens housing (350) having a camera lens and adapted to slide in the longitudinal direction of the folder while continuously facing the first display device (210) to expose/hide the first display device (210) and the camera lens, simultaneously and gradually as it slides.

## Description

### BACKGROUND OF THE INVENTION

### 1. Field of the Invention

The present invention relates to digital portable communication apparatuses including cellular phones, Personal Digital Assistants (PDAs), Hand Held Phones (HHPs), game phones, camera phones, and text-transmission message phones, and more particularly to a portable apparatus having a display device and a camera lens simultaneously and gradually exposed as the slider slides.

### 2. Description of the Related Art

In general, a "portable communication apparatus" refers to an electronic apparatus that a user can carry to perform wireless communication with a desired partner. To facilitate portability, designs of such portable communication apparatuses tend not only to be compact, slim, and light, but are also moving toward providing multimedia availability, having a wider variety of functions. In particular, future portable communication apparatuses are expected to incorporate greater multi-functionality and be capable of multi-purpose utilization, as well as to be more compact, lightweight, and capable of being modified to be suitable for various multimedia or Internet environments. Additionally, portable communication apparatuses are now commonly used by people of all ages and all walks of life throughout the world, and are recognized by some people as a nearly indispensable which must be carried all the time.

Portable communication apparatuses may be classified into various categories according to their appearance, such as bar-type portable communication apparatuses, flip-type portable communication apparatuses, and folder-type portable communication apparatuses. The bar-type communication apparatus have a single housing shaped like a bar. The flip-type communication apparatuses have a flip rotatably coupled to a bar-shaped housing by a hinge device. The folder-type communication apparatuses have a folder connected to a single bar-shaped housing by a hinge device in such a manner that the folder can be rotated to fold on or unfold from the housing.

Portable communication apparatuses may also be classified into neck-wearable type communication apparatuses and wrist-wearable type communication apparatuses according to the position or way in which users put on the devices. The neck wearable type communication apparatuses are worn around the user's neck using a string, and the wrist-wearable type communication apparatuses are worn around the users' wrist.

In addition, portable communication apparatuses may be classified into rotation-type communication apparatuses and sliding-type communication apparatuses according to the manner of opening and closing the devices. In the rotation-type communication apparatuses, two housings are coupled to each other in such a manner that one housing rotates to be opened or closed relative to the other while they face each other. In the sliding-type communication apparatuses, two housings are coupled to each other in such a manner that one housing slides along a longitudinal direction to be opened or closed relative to the other housing. These variously classified portable communication apparatuses can be easily understood by those skilled in the art.

Meanwhile, conventional portable communication apparatuses now tend to transmit data at a high speed in addition to performing the basic voice communication function. In other words, according to the increase in consumers demand, portable communication apparatuses now tend to provide a service using a wireless communication technology capable of transmitting data at a high speed.

Recent portable communication apparatuses also tend to be equipped with a camera lens to obtain video signals for transmission. In other words, current portable communication apparatuses have an external or embedded camera lens module which enables users to perform video communication with desired partners or to photograph desired subjects.

However, conventional folding-type portable apparatuses have a problem in that the display device and camera lens, which are positioned on the folder, are always exposed to external environments and are frequently damaged by them. In particular, portable apparatuses are often dropped carelessly when carried and the display device or camera lens, which is exposed to the exterior, is inevitably damaged. This causes additional cost for repair. Further, the camera lens of conventional portable apparatuses are fixedly mounted in a camera mode and is inconvenient for photographing.

### SUMMARY OF THE INVENTION

Accordingly, the present invention has been made to solve the above-mentioned problems occurring in the prior art, and an object of the present invention is to provide a portable apparatus having a slider positioned on the folder and a display device and a camera lens adapted to gradually and simultaneously be exposed, as the slider slides, so that they are simultaneously protected from external environments and are conveniently used in a camera mode.

Another object of the present invention is to provide a portable apparatus having a slider incorporating double functions of protecting the display device and exposing the display device and the camera lens according to whether sliding occurs or not.

Still another object of the present invention is to provide a folding-type portable apparatus having a slider and combining the advantages of folding-type and sliding-type apparatuses for convenient use.

In order to accomplish these objects, there is provided a folding-type portable apparatus including a body; a folder having a first display device positioned on the top surface thereof; and a slider provided with a camera lens housing having a camera lens and adapted to slide in the longitudinal direction of the folder while continuously facing the first display device to expose/hide the first display device and the camera lens simultaneously and gradually as it slides.

### BRIEF DESCRIPTION OF THE DRAWINGS

The above and other objects, features, and advantages of the present invention will be more apparent from the following detailed description taken in conjunction with the accompanying drawings, in which:
FIG. 1 is a perspective view showing a folding-type portable apparatus having a slider according to a preferred embodiment of the present invention;
FIG. 2 is a perspective view showing a folding-type portable apparatus, after its slider has moved a predetermined distance, according to a preferred embodiment of the present invention;
FIG. 3 is a perspective view showing a folding-type portable apparatus, after its slider has moved a predetermined distance and the camera lens has been drawn out, according to a preferred embodiment of the present invention;
FIG. 4 is a front view of the folding-type portable apparatus shown in FIG. 2;
FIG. 5 is a front view of the folding-type portable apparatus shown in FIG. 3;
FIG. 6 is a front view showing a folding-type portable apparatus, with its folder completely unfolded, according to a preferred embodiment of the present invention;
FIG. 7 is a front view showing a folding-type portable apparatus, with its folder unfolded and the slider slid, according to a preferred embodiment of the present invention; and
FIG. 8 is a perspective view showing a folding-type portable apparatus having a slider according to another preferred embodiment of the present invention.

### DETAILED DESCRIPTION OF THE PREFERRED EMBODIMENT

Hereinafter, preferred embodiments of the present invention will be described with reference to the accompanying drawings. In the following description of the present invention, a detailed description of known functions and configurations incorporated herein is omitted to avoid making the subject matter of the present invention unclear.

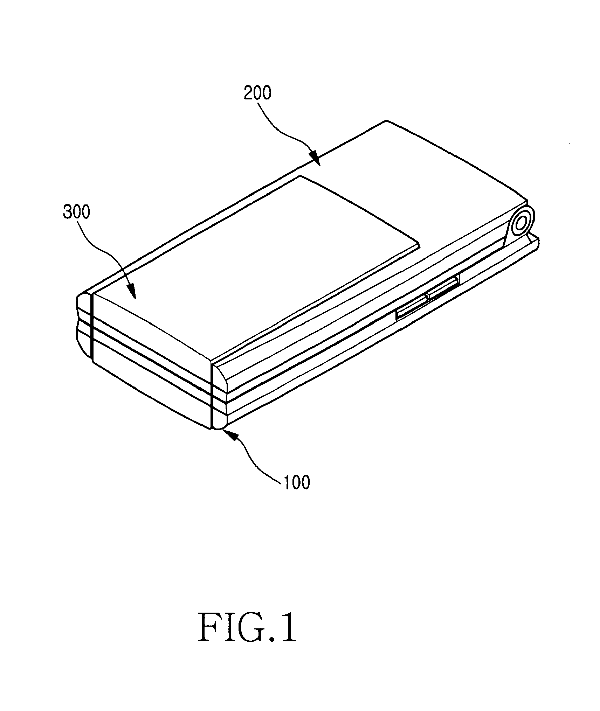

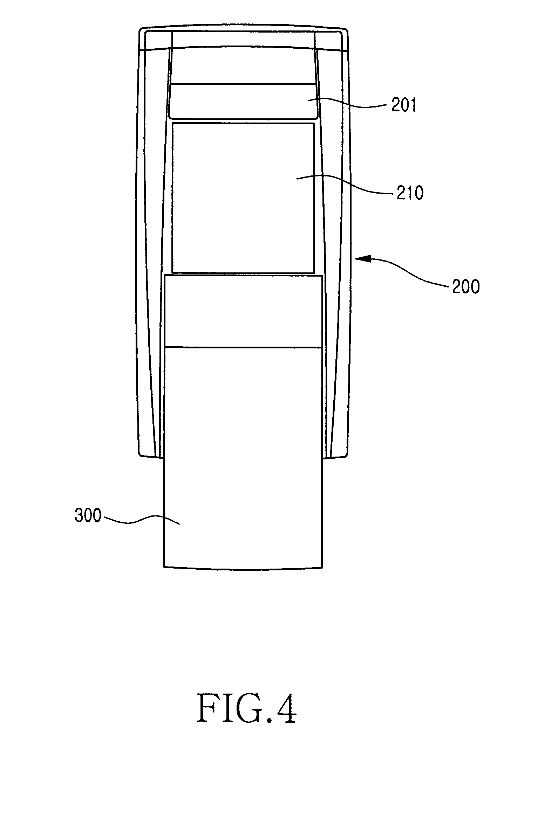

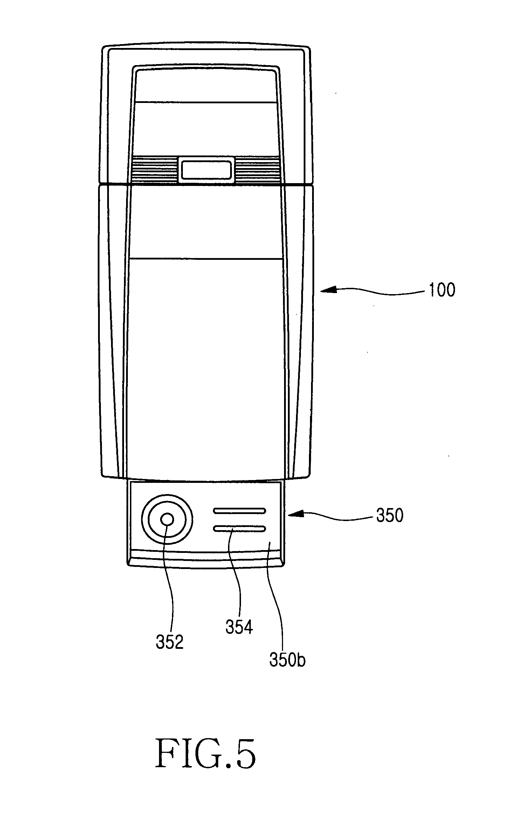

As shown in FIGs. 1 to 5, a portable apparatus according to the present invention includes a body 100, a folder 200 rotatably connected to the body 100 and provided with a first display device 210, and a slider 300 adapted to slide linearly on the folder 200 to expose/cover the first display device 210. The folder 200 is adapted to rotate about a hinge axis A towards or away from the body 100. The slider has a camera lens housing 350 and a camera 352 positioned on the bottom surface 350b of the camera lens housing 350. The slider 300 is adapted to slide in the longitudinal direction of the folder 200 while continuously facing the first display device 210. The first display device 210 and the camera lens 352 are simultaneously exposed/covered according to whether the slider 200 is slid.

The camera lens 352, which is positioned on the bottom surface of the camera lens housing 350, is always exposed to the bottom surface of the folder 200 and is simultaneously exposed together with the first display device 210 as the slider 300 slides. The camera lens housing 350 has the shape of a box and protrudes from the bottom surface of the slider 300. The camera lens housing 350 is integral with the slider 300. The camera lens housing 350 has a lighting device 354 positioned on the bottom surface thereof while being adjacent to the camera lens 352.

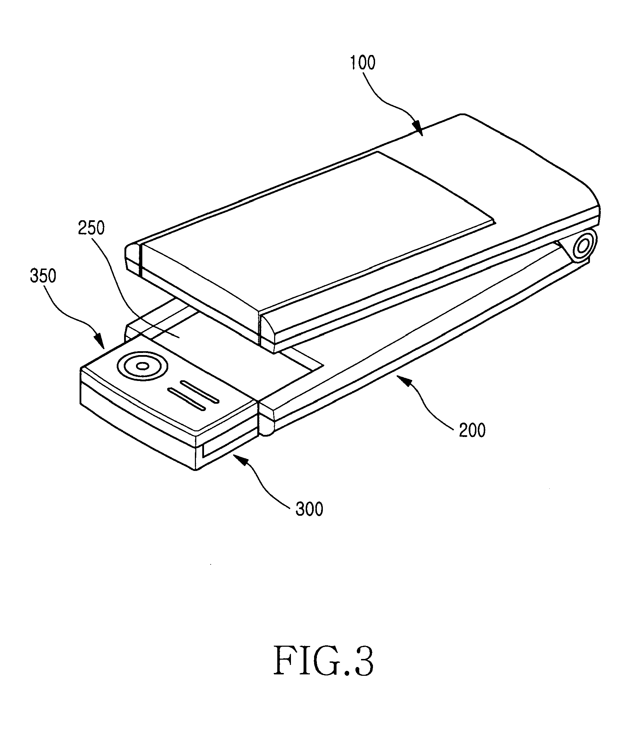

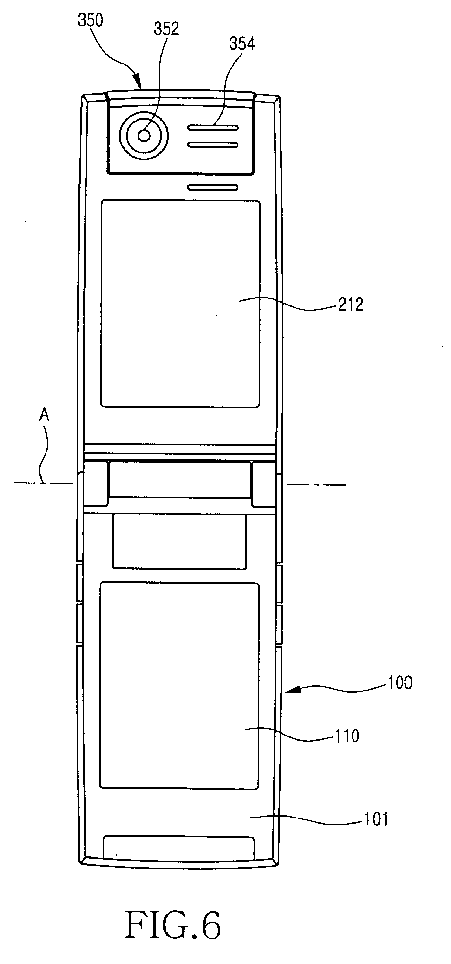

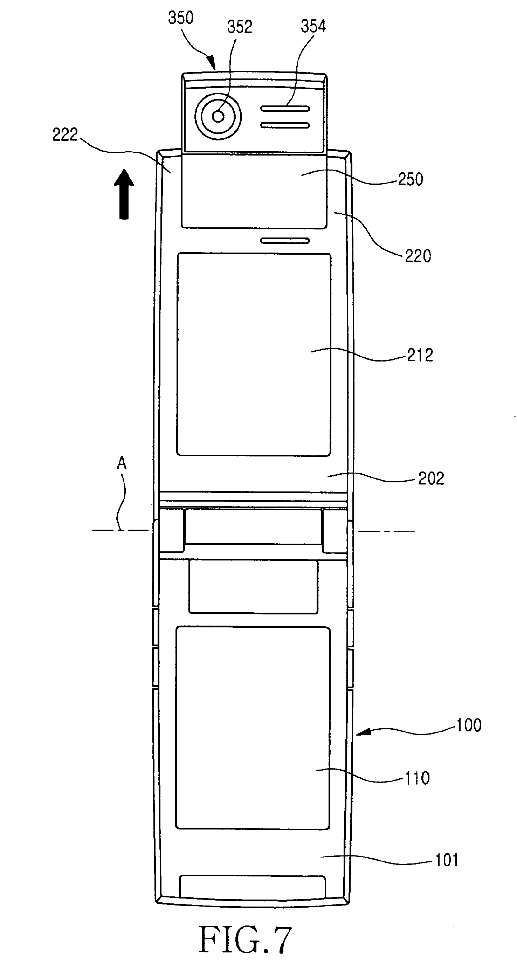

As shown in FIGs. 6 and 7, the folder 200 has an opening means 250 (shown in FIG. 3) for receiving the camera lens housing 350 and guide support means 220 and 222 for supporting the sliding of the camera lens housing 350. The opening means 250 includes a number of openings which are open towards the top, bottom, and front surfaces of the folder 200, respectively. The guide support means include a pair of support arms 220 and 222, between which the opening means 250 is positioned.

The body 100 has an information input/output device 110 positioned on the top surface 101 thereof, which is preferably a touch screen. The folder 200 has a second display device 212 positioned on the bottom surface 202 thereof, which is preferably an LCD.

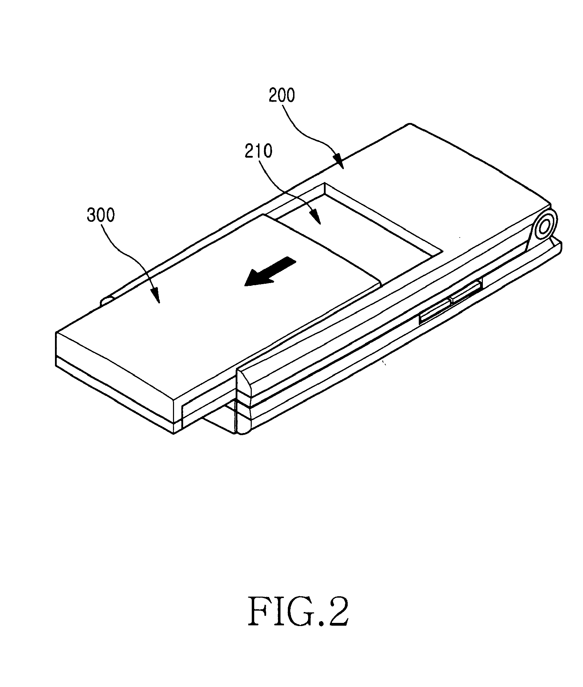

When the folder 200 is completely folded on the body 100 and the slider 300 is completely slid into the folder 200, as shown in FIG. 1, the first display device 210 is completely hidden by the slider 300 and the camera lens 352 is completely hidden by the body 100. When the slider 300 is completely pulled out from the folder 200, as shown in FIG. 2 or 3, all of the first display device 210 and the camera lens 352 are exposed. In such a state, the user can take pictures of desired objects via the camera lens 352 while watching the first display device 210.

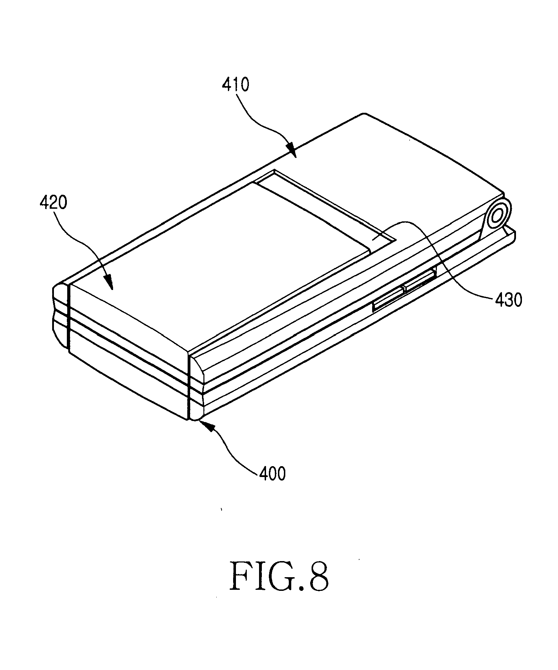

Although the first display device is completely hidden when the slider is completely slid into the body in the present embodiment, the first display device may have a part 430 which is always exposed when the folder 410 is completely folded on the body 400 and the slider 420 is completely slid into the body 400, as shown in FIG. 8, in an alternative embodiment. In this case, the first display device can display data including time, date, the battery's charge level, the antenna's reception sensitivity, and arrival of messages, etc. via the exposed part 430. The alternative embodiment has the same construction as the previous embodiment, except for the above configuration, and repeated description thereof will be omitted.

As mentioned above, the present invention is advantageous in that the display region of the display devices expands and the camera lens is exposed, as the slider slides, for convenient photographing in a camera mode. In addition, the first display device is protected from the external environment by the slider. While the invention has been shown and described with reference to certain preferred embodiments thereof, it will be understood by those skilled in the art that various changes in form and details may be made therein without departing from the spirit and scope of the invention as defined by the appended claims. For example, the slider according to the present invention is not limited to use in folding-type portable apparatuses and can be used for all types of portable apparatuses including bar-type and rotation-type apparatuses.

## Claims

1. A folding-type portable apparatus comprising:
a body (100, 400);
a folder (200, 410) having a first display device (210) positioned on the top surface thereof, and
a slider (300, 420) provided with a camera lens (352) and adapted to slide in a longitudinal direction of the folder (200, 410) while continuously facing the first display device (210) to selectively expose and cover at least partially the first display device and a camera lens.

2. The portable apparatus as claimed in claim 1, wherein the camera lens (352) is positioned on a bottom surface (350b) of a camera lens housing (350) such that it always faces a bottom surface (202) of the folder (200) and is exposed together with the first display device (210) as the slider (300) slides.

3. The portable apparatus as claimed in claim 2, wherein the folder (200, 410) has an opening means (250) to receive the camera lens housing (350).

4. The portable apparatus as claimed in claim 3, further comprising a guide support means (220, 222) having a pair of support arms, between which the opening means (250) is positioned.

5. The portable apparatus as claimed in claim 3, wherein the opening means (250) comprises a number of openings which are open towards the top, bottom, and front surfaces of the folder, respectively.

6. The portable apparatus as claimed in claim 1, wherein the folder (200, 410) has a guide support means (220, 222) to support the sliding of the camera lens housing (350).

7. The portable apparatus as claimed in claim 6, wherein the guide support means (220, 222) comprises a pair of support arms, between which the opening means is positioned.

8. The portable apparatus as claimed in claim 1, wherein the body has an information input/output device (110) positioned on a top surface (101) thereof and the folder (200, 410) has a second display device (212) positioned on a bottom surface thereof.

9. The portable apparatus as claimed in claim 1, wherein the slider (300, 420) is adapted to slide linearly.

10. The portable apparatus as claimed in claim 2, wherein the camera lens housing (350) is box-shaped.

11. The portable apparatus as claimed in claim 2, wherein the camera lens housing (350) is integral with the slider (300, 420).

12. The portable apparatus as claimed in claim 2, wherein the camera lens housing (350) has a lighting device (354) positioned on a bottom surface (350b) thereof adjacent to the camera lens (352).

13. The portable apparatus as claimed in claim 1, wherein the camera lens housing (350) protrudes from a bottom surface of the slider so as to be received in the folder.

14. The portable apparatus as claimed in claim 1, wherein, when the folder (200) is completely folded on the body (100) and the slider (300) is completely slid into the folder, the first display device (210) is completely hidden by the slider (300) and the camera lens (352) is completely hidden by the body (100) and, when the slider is completely pulled out from the folder, both the first display device and the camera lens are exposed.

15. The portable apparatus as claimed in claim 1, wherein, when the folder (410) is completely folded on the body (400) and the slider (420) is completely slid into the folder, the first display device is partially exposed by the slider and the camera lens is completely hidden by the body and, when the slider (420) is completely pulled out from the folder, both the first display device and the camera lens are exposed.
